# EUROPEAN PATENT SPECIFICATION

(11) **EP 2 365 687 B1**
(45) Date of publication and mention of the grant of the patent: **06.03.2013**
(21) Application number: 10162411.2
(22) Date of filing: 10.05.2010
(51) Int. Cl.: H04M 3/46, H04M 3/42

(54) **Intelligent call forking mechanism**
Intelligentes Anrufgabelungsmechanismus
Mécanisme de fourche à appel intelligent

(30) Priority: 09.03.2010 IN CH06242010
(43) Date of publication of application: 14.09.2011
(73) Proprietor: Alcatel Lucent, 75007 Paris (FR)
(72) Inventor: Kathick, Rajapandiyan, 600044 Chennai (IN); Gopannan, Ramachandran, 600045 Chennai (IN); Balamurugan, Balasubramanian, 600082 Chennai (IN)
(74) Representative: Shamsaei Far, Hassan

(56) References cited:
- WO-A1-2009/046169
- GB-A- 2 407 228
- US-A1- 2006 056 612

## Description

The present invention relates to communications networks and, more particularly, to call forking in communication networks.

### BACKGROUND

Present day communication networks offer different Value Added Services (VASs) to their customers. Parallel forking of calls is a VAS, wherein a call may be directed to a set of forked extension numbers of a called line. In such a scenario, when a caller tries to connect to a called line number which has forking enabled, his calls will be directed to a set of extension lines that are parallels to the called line. The call may be answered using any one of the parallel lines. When the call is addressed by any one of the parallel lines, the connections with the other parallel lines are disconnected. Further, when the same caller tries to connect to the same called line number the process is repeated from the scratch i.e., he is again connected to all the forked lines of the same called line. Consider an instance, where a particular user calls a forked calling line and his call is received by a person with whom he may have shared some queries and extracted required information. There is every possibility that the user may want to connect back to the same person in case he has more queries. This is because if he connects with the same person he need not explain to him all the details from the beginning as the person has already addressed his query earlier. On the other hand, if he is directed to any new person he will be required to give every detail and also details as to how his query was addressed by person he spoke to earlier. This is a cumbersome process and also consumes a lot of time of the user. In addition, it may also be possible that his query is not addressed properly.

To address the above problems call centers employ different solutions. In a call center, when a call is received, the solution records the caller's details. For any subsequent calls made by the same caller, the call is directed to the same person who addressed the call earlier. The entire call management function is handled by the solution, which is a software application. Such mechanisms do not exist in other environments such as Public Switched Telephone Network (PSTN), Next Generation Networks, IP Multimedia Subsystems (IMS) networks and the like.

International patent publication WO 2009/046169 discloses a system for call forking, wherein incoming calls are routed based on the called party's historical call pattern.

### SUMMARY

In view of the foregoing, an embodiment herein provides a system for call forking in a communication network adapted for checking if a caller was connected to a forked line of a calling line in a pre-configured time period on receiving a call from the caller to the calling line, wherein the calling line has forking enabled. Further, connecting the caller to the forked line, if the caller was connected to the forked line in the pre-configured time period. The system is adapted for directing the caller to all forked lines if the caller did not make a call in the pre-configured time period. The system is adapted for forking the call to at least one of a cell phone, a telephone line, an internet protocol phone. The system is further adapted for checking profile details of user of the calling line to check if the caller was connected to the forked line in the pre-confgured time period. The system is adapted for updating service settings of the calling line if the caller was connected to the calling line in the pre-configured time period. The system is adapted for assigning priority to the forked line of the calling line which the caller was connected to in the pre-configured time period. The system is adapted for connecting the caller to the forked line by changing service setting to intelligent forking. The system is adapted for changing pre-configured time period on receiving a message from a network operator.

Also, disclosed herein is a method for call forking is a communication network. The communication network comprising an application server, a home subscriber server and a serving call session control function. The method performing steps of a calling line receiving a call from a caller, serving call session control function checking if the caller was connected to a forked line of the calling line in a time period and serving call session control function connecting the caller to the forked line that he was connected to in the time period. The caller is connected to all forked lines if the caller did not make a call to the calling line in the time period. The serving call session control function fetches profile of calling line user. The time period is configured by the network operator. The home subscriber server assigns priority to the forked line that the caller was connected to during the time period. The method connects caller to the forked line by changing service setting to intelligent forking.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 illustrates the network architecture for call forking scenario, according to an embodiment as disclosed herein;

FIG. 2 illustrates a Home Subscriber Server (HSS), according to an embodiment as disclosed herein;

FIG. 3 is a flow chart depicting call forking scenario, according to an embodiment as disclosed herein;

FIG. 4a and 4b are flow diagrams depicting call forking scenario in IMS network, according to an embodiment as disclosed herein; and

FIG. 5 is a flow diagram depicting a second scenario for call forking in IMS network, according to an embodiment as disclosed herein.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

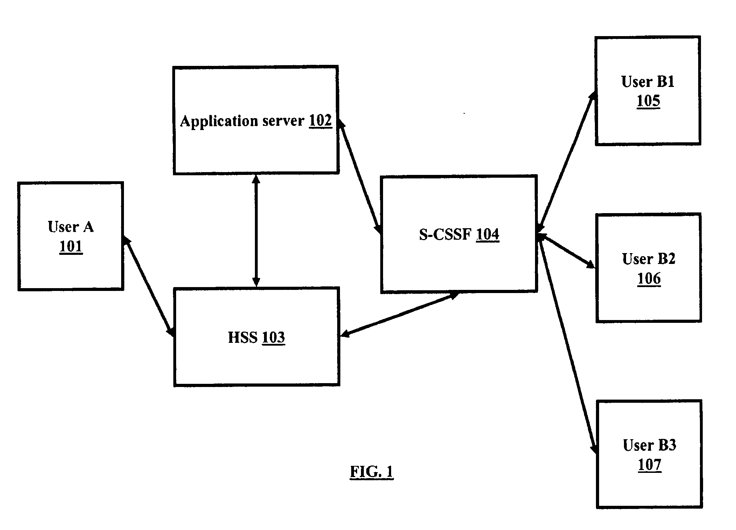

The embodiments herein disclose methods for intelligent call forking in communication networks by forking calls to the same calling line as that of a previous call. Referring now to the drawings, and more particularly to FIGS. 1 through 5, where similar reference characters denote corresponding features consistently throughout the figures, there are shown embodiments.

A mechanism for intelligent call forking is disclosed. The mechanism employs systems and methods for forking calls intelligently in a call forking environment. In intelligent call forking scenario, the method may be capable of determining if a caller was earlier connected to any of the forked lines of a calling line. If the caller was connected earlier to the calling line, the method directs the caller to the same forked line of the calling line. The method may be employed in PSTN network, NGN networks, Session Initiation Protocol (SIP) networks and the like, but not limited to the same. Consider the case where a called line has a set of forked lines. The call may be forked to either a cell phone number, a telephone number, a Voice over Internet Protocol (VOIP) number, an extension line of the telephone or the like. When a user makes a call to a forked called line, his call may be directed to all the forked lines of the same called line. Further, his call is addressed by any one of the forked lines. The network makes a record of the details of the user who called the forked line. The details may include MSISDN of the user, time of call, the forked number which answered his call and the like. At a later point of time, when the same user tries to connect to the same forked called number, his details may be checked by the network. If the network discovers that the same user had been connected to the same forked number earlier, the network may directly connect the call of the user to the same forked line that addressed him earlier. Hence, parallel forking is converted to intelligent forking for a specific user to a particular called line.

FIG. 1 illustrates the network architecture for call forking scenario, according to an embodiment as disclosed herein. IMS network components are shown for illustrative purposes and do not intend to limit the scope of the application to IMS networks. The network components like an application server 102, a HSS 103, a Serving Call Session Control Function (S-CSCF) 104 are configured to achieve intelligent call forking.

User A 101 may be a person who makes a call to a forked called line i.e., user A 101 may be a calling party. The Home Subscriber Server (HSS) 103 is a master database that supports the network entities that handle intelligent call forking service. The HSS 103 may comprise subscriber related information such as the profiles of users who register with the intelligent call forking service and the like. When call forking is to be activated, a message may be sent to the HSS 103. The HSS 103 performs authentication and authorization of the users who connect to the forked called lines. The HSS 103 also sends instructions to the S-CSCF 104 to perform the required function and retrieves user profiles, service update messages etc from the S-CSCF 104. In addition, the HSS 103 may also send commands to the application server 102 for fetching any information required.

The application server 102 interfaces with the S-CSCF 104 and the HSS 103 to manage the call forking functions. The application server 102 is configured to host and execute the intelligent call forking services in parallel forking environment. The application server 102 provides support to different applications required for intelligent call forking services. When the call forking service needs to be activated for a user, the HSS 103 instructs the application server 102 for necessary support to the service. On verifying the details of the user, the application server 102 may then activate the intelligent call forking service. The application server 102 may communicate with its interfaces by using Session Initiation Protocol (SIP).

The S-CSCF 104 may be used to process SIP signaling packets in case of IMS networks. The S-CSCF 104 is the central node of the signaling plane in the network and performs session control functions. The S-CSCF 104 is interfaced with the application server 102 and the HSS 103. The S-CSCF 104 receives all the required service information from the HSS 103 and sends service update messages to the HSS 103. On receiving request from a user for registration of call forking service, the HSS 103 directs the request to the S-CSCF 104. The S-CSCF 104 then maintains profile details of the user registered for the intelligent call forking service. In addition, details such as the numbers of the callers who call the user registered with the call forking service, time of the call, time period for the call forking, service details such as when to switch from parallel to intelligent forking and the like may also be stored in the S-CSCF 104. Time period of call forking may be the defined time, during which if a user makes a second call to the same called line he is directed to the same called line. In an example, if the time period specified is one hour, for any second call made by the same user in past one hour, the user may be directed to the same extension line as he had connected to earlier.

User B1 105, user B2 106 and user B3 107 may be forked lines of the called line of a user B registered with the network for call forking service. An incoming call may be directed to all the three forked lines and when the service is changed to intelligent forking, the call may be directed only to one forked line.

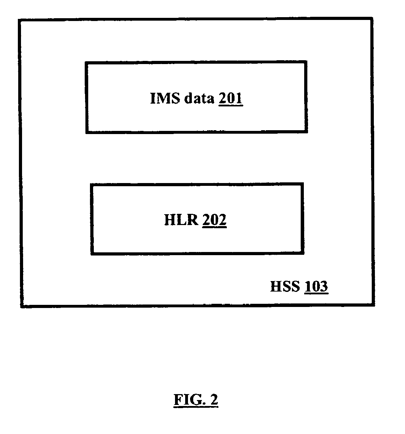

FIG. 2 illustrates a Home Subscriber Server (HSS), according to an embodiment as disclosed herein. The HSS 103 performs authorization and authentication of the users who connect to the call forking service. The HSS 103 comprises of IMS data storage 201 and Home Location Register (HLR) 202. The IMS data storage 201 is employed for storing data related to call forking service. The data such as profile settings of users, different services user is configured to and the like may be stored in IMS data storage 201.

The HLR 202 is a central database that contains details of each subscriber who is authorized to use the network. The details of the users who register for the call forking service may be maintained in the HLR 202. One International Mobile Subscriber Identity (IMSI)/MSISDN pair can be associated with only one logical HLR 202 at a time. In an embodiment, HLR 202 stores details of every calling line of the subscriber. The HLR 202 data is stored for as long as a user remains with the network operator. The service data on the HLR 202 is updated regularly.

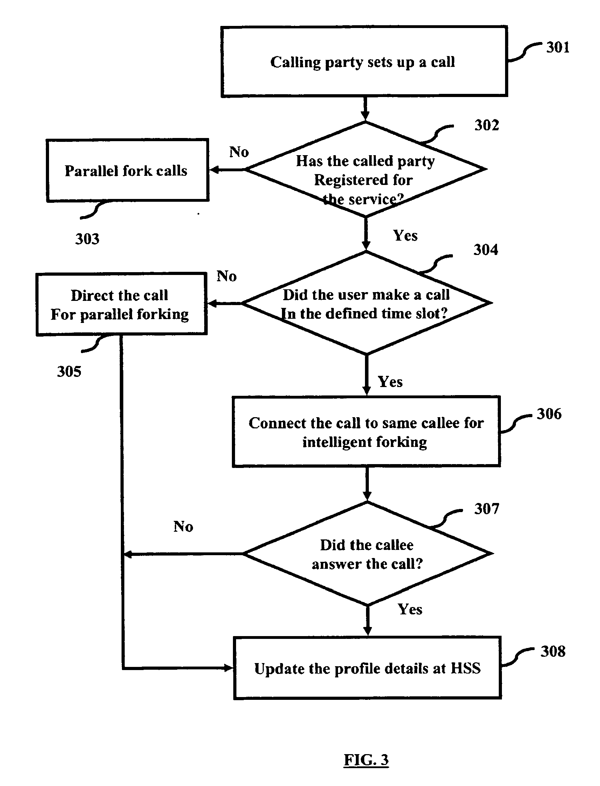

FIG. 3 is a flow chart depicting call forking scenario, according to an embodiment as disclosed herein. User A 101 may be a calling party who tries to connect (301) to other user B. User B's profile may be in IMS private user identity (IMPU) and called line may have different forked lines such as user B1 105, user B2 106 and user B3 107. When user A 101 makes a call, the call may be directed to the S-CSCF 104 i.e., the S-CSCF 104 of user B. The S-CSCF 104 checks with the HSS 103 to check (302) if the called party i.e., user B is registered for the Intelligent call forking service. In case the user B is not registered for the intelligent call forking service, his calls may be forked (303) to the forked lines. If user B has registered for the service, a check (304) may be made if user A 101 has made a call to user B in the defined time by checking the profile of user B. In this case 'defined time' may be the time specified by the service during which if a user A 101 tries to connect to user B again, he may be connected to the same forked line as he was connected to earlier. In an example, consider if the time specified is 24 hours and say user A 101 makes a first time call to user B and is connected to user B2 106. When the user A 101 calls back within a time period of 24 hours, he is connected to same user B2 106. In case user A 101 has made a call in defined time, a message may be sent for activating intelligent call forking and the user may be connected (306) to same caller again. Further, for any call received from user A 101 the call is directed to user B2 106. If the user A 101 did not make a call earlier, then his call may be directed (305) for parallel forking to other lines. A check (307) is made if the same caller i.e., user B2 106 answered the call. If user B2 106 answers the call the process is directed to step 308. On the other hand, if user B2 106 does not answer the call, the call may be directed to other forked lines of user B for parallel forking. Further, the call details such as time of the call and the like may be updated (308) at the profile of user B2 106 and user A 101. The various actions in method 300 may be performed in the order presented, in a different order or simultaneously. Further, in some embodiments, some actions listed in FIG. 3 may be omitted.

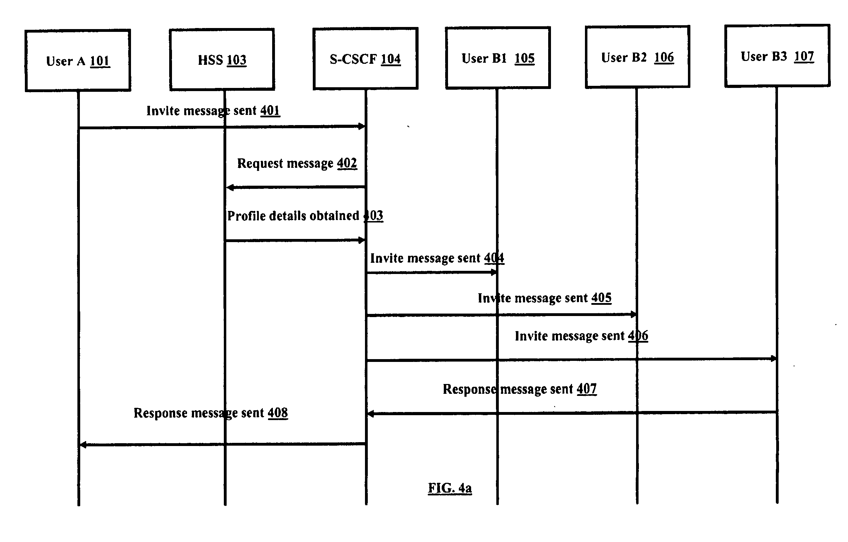

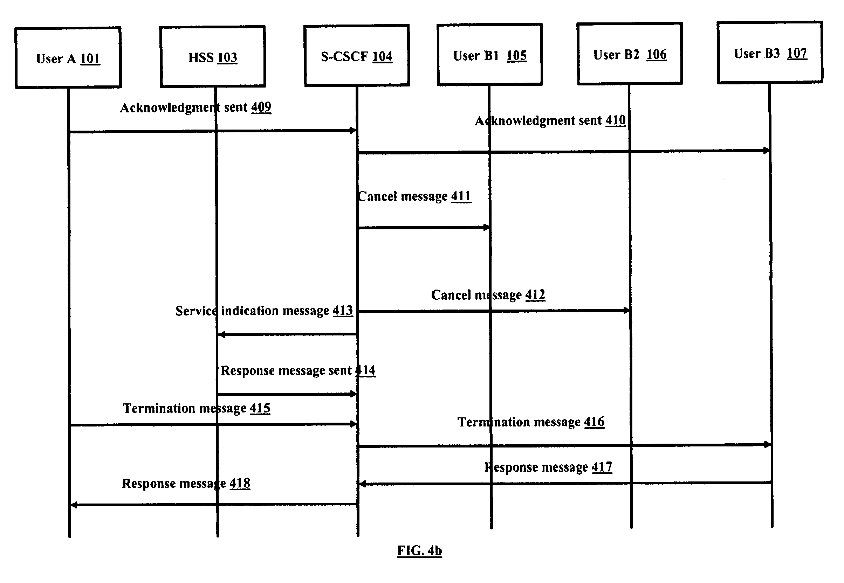

FIG. 4a and 4b are flow diagrams depicting call forking scenario in IMS network, according to an embodiment as disclosed herein. The scenario in the embodiment is intended for illustrative purposes and does not aim to limit the scope of the invention. User A 101 makes a call to user B who has forked lines for his calling line. The user B is registered for the intelligent call forking service. In an embodiment, the call forking service is referred to as CLI-based target forking. An invitation message may be sent (401) to the S-CSCF 104 of user B to establish the call. The invitation message may be of the form of an INVITE and the like. The S-CSCF 104 then sends (402) a request message to the HSS 103 of user B. In an embodiment, the request message may be a Cx interface message to HSS 103 that is a request for profile of user B based on the CLI message. The HSS 103 then sends (403) the requested profile details to the S-CSCF 104. The details such as profile contents with the type of service i.e., list of the IP Multimedia Private Identity (IMPIs) to connect; time of call last made by user A 101 and so on may be retrieved. The invite messages may also be sent to other forked lines of user B such as user B1 105, user B2 106 and user B3 107 in steps 404, 405 and 406. The call may be addressed by user B3 107. A response message may be sent (407) from user B3 107 to the S-CSCF 104. The S-CSCF 104 then sends (408) the response message to user A 101. User A 101 sends (409) an acknowledgment message to the S-CSCF 104. The acknowledgment message may be in the form of 200 OK or the like. The acknowledgment message is sent (410) to user B3 107. The S-CSCF 104 sends (411) a cancel message to the user B1 105 as the call is addressed by user B3 107. A cancel message is also sent (412) to user B2 106. The S-CSCF 104 sends (413) a service indication message (Server Assignment Request Message (SAR) to the HSS 103. The SAR message contains in its user data the following indications as 'cli-target based forking' and 'forking = sequential'. The service is then updated in HSS profile. using SAR message using new user data indication. This indicates that any call in future from the user A 101 is directed to user B3 107 i.e., parallel forking is converted to intelligent forking. The HSS 103 sends (414) a message Server Assignment Answer (SAA) to S-CSCF 104 indicating the service is modified to intelligent forking. Further, when user A 101 has completed the call, user A 101 sends (415) a termination message to S-CSCF 104. The termination message may be a BYE message or the like. The S-CSCF 104 then sends (416) the termination message to user B3 107. The user B3 107 sends (417) a response message to the S-CSCF 104. The S-CSCF 104 sends (418) the response message to the user A 101 indicating the process is come to halt. The various actions in method 400 may be performed in the order presented, in a different order or simultaneously. Further, in some embodiments, some actions listed in FIG. 4 may be omitted.

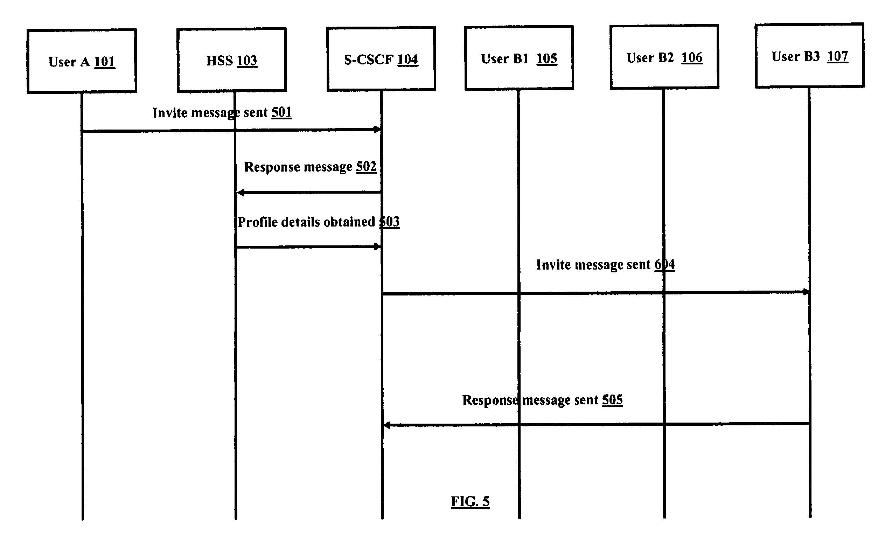

FIG. 5 is a flow diagram depicting a second scenario for call forking in IMS network, according to an embodiment as disclosed herein. In the disclosed embodiment, consider user A 101 had made a call to the calling line of user B and was connected to user B3 107. The user A 101 may want to connect to the calling line of user B again. User A 101 initiates a call. The invitation message may be sent (501) to the S-CSCF 104 of user B. The S-CSCF 104 makes (502) a request for the profile details of user B in order to determine if the user A 101 had called to the same calling line earlier. The profile details may be obtained (503) from the HSS 103. Further, the S-CSCF 104 identifies the forked line which the user A 101 was connected to earlier and a priority is assigned to that forked line. Further, S-CSCF 104 sends (504) an invitation message to user B3 107. In response to the invitation message, user B3 107 sends (505) a response message. User B3 107 is connected to user A 101 and the call continues. For any further calls made by user A 101, he may be connected to user B3 107. Thus, enabling intelligent forking in parallel forking environment. The various actions in method 500 may be performed in the order presented, in a different order or simultaneously. Further, in some embodiments, some actions listed in FIG. 5 may be omitted.

An illustrative example of the implementation of the call forking is as follows. Consider a company is provided with a calling line that has three forked lines. The calling line corresponds to the manager X and the three forked lines are for three different secretaries A, B and C. An outsider Y makes a call to the company. The call is connected to calling line X and since X is forked the call is then directed to the forked lines A, B and C. The call may be answered by secretary B. The calling line X is registered for the new intelligent call forking service, and thus the calls set up to X may be recorded.

At a later point of time, the same Y makes a call to the calling line X. When Y makes a request to set up the call with X, the service logic on S-CSCF makes a check if Y had made a call earlier. The call details recorded indicate that Y had called two hours before and was connected to secretary B. The S-CSCF then directs the call to secretary B i.e., intelligent forking is activated for this call. In case secretary does not answer the call, the call is directed to other two secretaries A and C i.e., parallel forking is again activated.

The time for which the call history is maintained and the callers are directed by activating intelligent forking may be determined by the service settings and implementation details. The timing may be configured as a day, week or unlimited time period.

The embodiments disclosed herein can be implemented through at least one software program running on at least one hardware device and performing network management functions to control the network elements. The network elements shown in Fig. 1 and 2 include blocks which can be at least one of a hardware device, or a combination of hardware device and software module.

The embodiment disclosed herein specifies a system for forking calls to a previously connected line in a call forking environment. The mechanism allows call forking by providing a system thereof. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in a preferred embodiment through or together with a software program on at least one hardware device. The hardware device can be any kind of device which can be programmed including e.g. any kind of computer like a server or a personal computer, or the like, or any combination thereof, e.g. one processor and two FPGAs. The device may also include means which could be e.g. hardware means like e.g. an ASIC, or a combination of hardware and software means, e.g. an ASIC and an FPGA, or at least one microprocessor and at least one memory with software modules located therein. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the claims as described herein.

## Claims

1. A system for call forking comprises means a communication network, **characterized in that** said system comprises means for:
checking if a caller was connected to a forked line of a calling line in a pre-configured time period on receiving a call from said caller to said calling line, wherein said calling line has forking enabled; and
connecting said caller to said forked line, if said caller was connected to said forked line in said pre-configured time period.

2. The system as in claim 1, wherein said system comprises means for directing said caller to all forked lines if said caller did not make a call in said pre-configured time period.

3. The system as in claim 1, wherein said system comprises means for forking said call to at least one of a cell phone, a telephone line, an internet protocol phone.

4. The system as in claim 1, wherein said system further comprises means for checking profile details of user of said calling line to check if said caller was connected to said forked line in said pre-configured time period.

5. The system as in claim 1, wherein said system comprises means for updating service settings of said calling line if said caller was connected to said calling line in said pre-configured time period.

6. The system as in claim 1, wherein said system comprises means for assigning priority to said forked line of said calling line which said caller was connected to in said pre-configured time period.

7. The system as in claim 1, wherein said system comprises means for changing pre-configured time period on receiving a message from a network operator.

8. A method for call forking suitable for a communication network, said communication network comprising an application server (102), a home subscriber server (103) and a serving call session control function (104), **characterized in that** said method comprises:
a calling line receiving a call from a caller;
said serving call session control function (104) checking if said caller was connected to a forked line of said calling line in a time period; and
said serving call session control function (104) connecting said caller to said forked line that he was connected to in said time period.

9. The method as in claim 9, wherein said caller is connected to all forked lines if said caller did not make a call to said calling line in said time period.

10. The method as in claim 9, wherein said serving call session control function (104) performs checking if said caller was connected to said calling line by fetching profile of said calling line user.

11. The method as in claim 9, wherein said time period is configured by the network operator.

12. The method as in claim 9, wherein said home subscriber server (103) assigns priority to said forked line that said caller was connected to during said time period.

## Patentansprüche

1. System zur Anrufgabelung, welches für ein Kommunikationsnetzwerk geeignet ist, **dadurch gekennzeichnet, dass** das Systems Mittel umfasst, um
zu prüfen, ob ein Anrufer während eines vorkonfigurierten Zeitraums mit einer gegabelten Leitung einer rufenden Leitung verbunden war, wenn ein Anruf von dem besagten Anrufer an die besagte rufende Leitung empfangen wird, wobei die Gabelung auf der besagten rufenden Leitung aktiviert ist; und
den besagten Anrufer mit der besagten gegabelten Leitung zu verbinden, wenn der besagte Anrufer während des besagten vorkonfigurierten Zeitraums mit der besagten gegabelten Leitung verbunden war.

2. System nach Anspruch 1, wobei das besagte System Mittel umfasst, um den besagten Anrufer an alle gegabelten Leitungen zu leiten, wenn der besagte Anrufer während des besagten vorkonfigurierten Zeitraums keinen Anruf getätigt hat.

3. System nach Anspruch 1, wobei das besagte System Mittel umfasst, um den besagten Anruf an mindestens entweder ein Mobiltelefon, eine Telefonleitung oder ein Internetprotokoll-Telefon zu gabeln.

4. System nach Anspruch 1, wobei das besagte System weiterhin Mittel zum Prüfen der Profildetails des Nutzers der besagten rufenden Leitung umfasst, um festzustellen, ob der besagte Anrufer während des besagten vorkonfigurierten Zeitraums mit der besagten gegabelten Leitung verbunden war.

5. System nach Anspruch 1, wobei das besagte System Mittel zum Aktualisieren von Diensteinstellungen der besagten rufenden Leitung umfasst, wenn der besagte Anrufer während des besagten vorkonfigurierten Zeitraums mit der besagten rufenden Leitung verbunden war.

6. System nach Anspruch 1, wobei das besagte System Mittel zum Zuteilen der Priorität an die besagte gegabelte Leitung der besagten rufenden Leitung, mit welcher der besagte Anrufer während des besagten vorkonfigurierten Zeitraums verbunden war, umfasst.

7. System nach Anspruch 1, wobei das besagte System Mittel zum Ändern des besagten vorkonfigurierten Zeitraums nach Empfang einer Nachricht von einem Netzwerkbetreiber umfasst.

8. Verfahren zur Anrufgabelung, welches für ein Kommunikationsnetzwerk geeignet ist, wobei das besagte Kommunikationsnetzwerk einen Anwendungsserver (102), einen Teilnehmer-Heimserver (103) und eine versorgende Rufsitzungssteuerungsfunktion (104) umfasst, **dadurch gekennzeichnet, dass** das besagte Verfahren umfasst:
Empfangen, an einer rufenden Leitung, eines Anrufs von einem Anrufer;
Prüfen, durch die besagte versorgende Rufsitzungssteuerungsfunktion (104), ob der besagte Anrufer während eines Zeitraums mit einer gegabelten Leitung der besagten rufenden Leitung verbunden war; und
Verbinden, durch die besagte versorgende Rufsitzungssteuerungsfunktion (104), des besagten Anrufers mit der besagten gegabelten Leitung, mit welcher er während des besagten Zeitraums verbunden war.

9. Verfahren nach Anspruch 9, wobei der besagte Anrufer mit allen gegabelten Leitungen verbunden wird, wenn der besagte Anrufer während des besagten Zeitraums keinen Anruf an die besagte rufende Leitung getätigt hat.

10. Verfahren nach Anspruch 9, wobei die besagte versorgende Rufsitzungssteuerungsfunktion (104) das Prüfen, ob der besagte Anrufer mit der besagten rufenden Leitung verbunden war, durch Abrufen des Profils des besagten Nutzers der rufenden Leitung durchführt.

11. Verfahren nach Anspruch 9, wobei der besagte Zeitraum durch den Netzwerkbetreiber konfiguriert wird.

12. Verfahren nach Anspruch 9, wobei der besagte Teilnehmer-Heimserver (103) der besagten gegabelten Leitung, mit welcher der besagte Anrufer während des besagten Zeitraums verbunden war, die Priorität zuteilt.

## Revendications

1. Système de bifurcation d'appels adapté à un réseau de communication, **caractérisé en ce que** ledit système comprend des moyens pour :
vérifier si un appelant était connecté à une ligne bifurquée d'une ligne d'appel pendant une période préconfigurée sur réception d'un appel dudit appelant à ladite ligne d'appel, dans lequel ladite ligne d'appel a activé la bifurcation ; et
connecter ledit appelant à ladite ligne bifurquée, si ledit appelant était connecté à ladite ligne bifurquée pendant ladite période préconfigurée.

2. Système selon la revendication 1, dans lequel ledit système comprend des moyens pour diriger ledit appelant vers toutes les lignes bifurquées si ledit appelant n'a pas passé d'appel pendant ladite période préconfigurée.

3. Système selon la revendication 1, dans lequel ledit système comprend des moyens pour bifurquer ledit appel vers au moins un élément parmi un téléphone cellulaire, une ligne téléphonique, un téléphone IP.

4. Système selon la revendication 1, dans lequel ledit système comprend en outre des moyens pour vérifier les détails du profil de l'utilisateur de ladite ligne d'appel afin de vérifier si ledit' appelant était connecté à ladite ligne bifurquée pendant ladite période préconfigurée.

5. Système selon la revendication 1, dans lequel ledit système comprend des moyens pour mettre à jour les paramètres de service de ladite ligne d'appel si ledit appelant était connecté à ladite ligne d'appel pendant ladite période préconfigurée.

6. Système selon la revendication 1, dans lequel ledit système comprend des moyens pour attribuer une priorité à ladite ligne bifurquée de ladite ligne d'appel à laquelle ledit appelant était connecté pendant ladite période préconfigurée.

7. Système selon la revendication 1, dans lequel ledit système comprend des moyens pour modifier la période préconfigurée sur réception d'un message provenant d'un opérateur réseau.

8. Procédé de bifurcation d'appels adapté à un réseau de communication, ledit réseau de communication comprenant un serveur d'application (102), un serveur d'abonné résidentiel (103) et une fonction de commande de session d'appel de desserte (104), **caractérisé en ce que** ledit procédé comprend :
réception par une ligne d'appel d'un appel provenant d'un appelant;
vérification, par ladite fonction de commande de session d'appel de desserte (104), si ledit appelant était connecté à une ligne bifurquée de ladite ligne d'appel pendant une période ; et
connexion, par ladite fonction de commande de session d'appel de desserte (104), dudit appelant à ladite ligne bifurquée à laquelle il était connecté pendant ladite période.

9. Procédé selon la revendication 9, dans lequel ledit appelant est connecté à toutes les lignes bifurquées si ledit appelant n'a pas passé d'appel à ladite ligne d'appel pendant ladite période.

10. Procédé selon la revendication 9, dans lequel ladite de commande de session d'appel de desserte (104) vérifie si ledit appelant était connecté à ladite ligne d'appel en récupérant le profil dudit utilisateur de la ligne d'appel.

11. Procédé selon la revendication 9, dans lequel ladite période est configurée par l'opérateur réseau.

12. Procédé selon la revendication 9, dans lequel ledit serveur d'abonné résidentiel (103) attribue une priorité à ladite ligne bifurquée à laquelle ledit appelant était connecté pendant ladite période.
